# EUROPÄISCHE PATENTSCHRIFT

(11) **EP 3 283 339 B1**
(45) Veröffentlichungstag und Bekanntmachung des Hinweises auf die Patenterteilung: **10.07.2019**
(21) Anmeldenummer: 16716573.7
(22) Anmeldetag: 15.04.2016
(51) Int. Cl.: B60T 13/68

(54) **ELEKTROPNEUMATISCHES BREMSSTEUERSYSTEM**
ELECTRO-PNEUMATIC BRAKE CONTROL SYSTEM
SYSTÈME DE COMMANDE DE FREIN ÉLECTROPNEUMATIQUE

(30) Priorität: 16.04.2015 DE 102015105791
(43) Veröffentlichungstag der Anmeldung: 21.02.2018
(73) Patentinhaber: KNORR-BREMSE Systeme für Nutzfahrzeuge GmbH, 80809 München (DE)
(72) Erfinder: ZEMAN, Ferenc, 1114 Budapest (HU); KRABOT, Matyas, 2310 Szigetszentmiklós (HU)
(86) Internationale Anmeldenummer: PCT/EP2016/058329
(87) Internationale Veröffentlichungsnummer: WO 2016/166272

(56) Entgegenhaltungen:
- DE-A1-102005 058 799
- DE-A1-102005 060 225
- DE-A1-102013 106 260

## Beschreibung

Die vorliegende Erfindung betrifft ein elektropneumatisches Bremssteuersystem eines Fahrzeugs, umfassend eine elektronische Steuereinheit zur Ansteuerung einer, durch eine Druckluftbereitstellungseinheit mit Druckluft versorgten, elektropneumatischen Parkbremsventilanordnung, eine daraus mündende Steuerleitung zur Steuerung der Drucklufteinspeisung und Entlüftung eines Federspeicherbremszylinders, ein über eine Versorgungsleitung eingangsseitig mit der Druckluftbereitstellungseinheit und ausgangsseitig mit dem Federspeicherbremszylinder verbundenes, durch die Steuerleitung angesteuertes Relaisventil, zur Ausgabe des in der Steuerleitung anliegenden Luftdrucks, ein manuell betätigbares, mechanisches Betriebsbremsbetätigungselement zur Steuerung der Drucklufteinspeisung und Entlüftung eines Betriebsbremszylinders über eine Betriebsbremsversorgungsleitung.

Das Einsatzgebiet der Erfindung erstreckt sich auf Fahrzeuge, die über elektrisch betätigbare, pneumatische Bremssysteme mit einer Betriebsbremse und einer Feststellbremse verfügen. Die Betriebsbremse wird dabei angelegt, indem durch einen pneumatischen, manuell auslösbaren Mechanismus ein Luftdruck in einen Betriebsbremszylinder eingespeist wird. Dieser Luftdruck wird dann verwendet, um einen Bremsbelag gegen eine Bremsscheibe eines Rades zu drücken. Die Feststellbremse oder Parkbremse ist hingegen elektronisch betätigbar, wobei beispielsweise auf Knopfdruck die Feststellbremse angelegt wird, indem ein Federspeicherzylinder entlüftet wird, so dass eine darin angeordnete mechanische Feder den Bremsbelag anpresst. Das Einspeisen von Druckluft in den Federspeicherzylinder führt entsprechend zum Lösen der Parkbremse.

Es ist möglich, dass beispielsweise durch elektrische Wackelkontakte, oder durch ein Versagen der Autobatterie, oder durch fehlerhafte Software oder Systemabstürze der jeweiligen elektronischen Steuereinheit diese inoperabel wird, und es somit dem Fahrer nicht mehr möglich ist, das Anlegen der Parkbremsen, also das Entlüften des Federspeicherzylinders, auszulösen.

Aus der DE 199 53 805 C1 geht ein kombinierter Betriebs- und Federspeicherbremszylinder für Nutzfahrzeuge hervor, welcher über einen elektromechanischen Aktuator und über einen federvorbelasteten, durch Druckluft auslenkbaren Kolben verfügt, um eine Feststellbremse zu lösen beziehungsweise anzulegen. Nachteilhaft hieran ist unter anderem die Notwendigkeit dieses relativ komplexen, durch den elektromechanischen Aktuator zusätzlich fehleranfälligen Bremszylinders. Auch die in der Patentschrift vorgeschlagene automatische Abbremsung im Falle eines elektronischen Defektes ist aus verschiedenen praxisbezogenen Gründen nachteilhaft.

Aus der EP 1 571 061 B1 geht eine elektrisch gesteuerte pneumatische Bremsanlage für ein Fahrzeug hervor, welche in einem Redundanzfall, wie beispielsweise bei einer elektrischen Störung, eine Abbremsung des Fahrzeuges mittels pneumatischer Ansteuerung eines Federspeicherbremszylinders zulässt. Die offenbarte Verwirklichung dieser Funktionalität beruht allerdings nachteilhafterweise auf einer Vielzahl elektropneumatischer Komponenten innerhalb einer Feststellbremsventileinrichtung. Auch die dort vorgeschlagene automatische Einleitung einer Vollbremsung im Redundanzfall ist unter praktischen Gesichtspunkten nicht wünschenswert.

Aus der EP 1 968 830 B1 geht eine elektropneumatische Bremssteuerungseinrichtung zur Steuerung einer Feststellbremse eines Fahrzeuges hervor, bei der insbesondere ein elektrisch angesteuertes Bistabilventil vorgesehen ist, über das ein Federspeicherbremszylinder befüllt und entlüftet werden kann und dessen Schaltzustand sich in einem Redundanzfall wie dem Verlust der elektrischen Spannungsversorgung nicht verändert. Nachteilhaft an der dort vorgeschlagenen Lösung ist unter anderem der relativ komplexe Aufbau zur rein mechanisch beziehungsweise pneumatisch ausgelösten Entleerung des Federspeicherzylinders.

Es ist die Aufgabe der vorliegenden Erfindung, ein einfach aufgebautes Bremssteuersystem zu schaffen, bei welchem insbesondere bei einem elektronischen Defekt die Feststellbremsen angelegt werden können.

Die Aufgabe wird ausgehend von einem elektropneumatischen Bremssteuersystem gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass ein monostabiles, pneumatisch betätigbares Steuerventil, umfassend einen durch die Betriebsbremsversorgungsleitung angesteuerten Steueranschluss, im stabilen Schaltzustand eine ausgangsseitige, in die Atmosphäre mündende, Luftauslassöffnung und eine eingangsseitige Entlüftungsleitung voneinander trennt und in einem instabilen Schaltzustand miteinander verbindet, wobei die Entlüftungsleitung dazu geeignet ist, den Federspeicherbremszylinder durch Betätigung des Betriebsbremsbetätigungselements zu entlüften.

Der Vorteil hierbei kann darin gesehen werden, dass es unabhängig von einer elektronischen Steuerung möglich ist, den Federspeicherbremszylinder zu entlüften, und somit die Feststellbremse anzulegen insbesondere ist dies über ein dem Fahrer zum Abbremsen bekanntes Betriebsbremsbetätigungselement, wie beispielsweise ein Bremspedal, möglich und bei minimalem technischen Aufwand realisierbar.

Bevorzugte Ausführungsformen der Erfindung sehen vor, dass das pneumatisch betätigbare Steuerventil die Druckluftversorgungsleitung eingangsseitig oder ausgangsseitig des Relaisventils oder die Steuerleitung, die das Relaisventil ansteuert, entlüftet.

Das Entlüften der Steuerleitung hat insbesondere den Vorteil, dass diese aufgrund ihrer typischerweise geringeren Querschnittes im Vergleich zur Versorgungsleitung schneller entlüftet werden kann. Das Entlüften der Druckluftversorgungsleitung eingangsseitig oder ausgangsseitig des Relaisventils kann ebenfalls beispielsweise aufgrund baulicher Eigenschaften, wie der Lage von pneumatischen Leitungen im Bremssteuersystem, vorteilhaft sein.

Eine besonders bevorzugte Ausführungsform der Erfindung sieht vor, dass ein durch die elektronische Steuereinheit angesteuertes monostabiles, elektrisch betätigbares Steuerventil in Reihe mit dem pneumatisch betätigbaren Steuerventil geschaltet ist, welches in der instabilen Schaltstellung die Entlüftung des Federspeicherbremszylinders durch das pneumatisch betätigbare Steuerventil verhindert und in der stabilen Schaltstellung ermöglicht.

Vorteilhaft hieran ist vor allem, dass somit auf technisch sehr einfache Weise gewährleistet wird, dass eine Entlüftung des Federspeicherbremszylinders über das pneumatisch betätigbare Steuerventil nur dann geschehen kann, wenn sich das elektrisch betätigbare Steuerventil in dessen stabiler Schaltstellung befindet. In der Praxis kann beispielsweise ein das Ventil betätigender Elektromagnet dauerhaft durch die elektronische Steuereinheit mit Strom versorgt werden, so dass der Weg zur Luftauslassöffnung dauerhaft blockiert ist. Nur im Falle eines elektronischen Defektes, wie beispielsweise eines Verlustes der elektronischen Versorgungsspannung, gibt der somit stromlose Elektromagnet das Steuerventil wieder frei, wodurch es sich, beispielsweise aufgrund von Vorbelastung durch eine Druckfeder, in dessen stabile Schaltstellung versetzt und die Verbindung der Entlüftungsleitung zur Luftauslassöffnung freigibt. Wenn nun das Betriebsbremsbetätigungselement betätigt wird, wird parallel zum Auffüllen des Betriebsbremszylinders auch das pneumatisch betätigbare Steuerventil angesteuert und somit der Federspeicherbremszylinder entleert.

Eine Verbesserung der Erfindung sieht vor, dass die Steuerleitung das Relaisventil über ein Select-High-Ventil ansteuert, welches eingangsseitig zusätzlich zur Steuerleitung auch mit der Betriebsbremsversorgungsleitung verbunden ist, zur Erwirkung einer Anti-Compound-Funktion.

Der Vorteil besteht hierbei darin, dass vorzugsweise in Systemen, in denen der Betriebsbremszylinder und der Federspeicherbremszylinder mit dem selben Bremskolben und Bremsbelag zusammenwirken, verhindert wird, dass durch den Luftdruck im Betriebsbremszylinder und durch die Druckfeder im Federspeicherbremszylinder ein unnötig hoher Druck auf Bremskolben, Bremsbelag oder Bremsscheibe ausgeübt wird. Im vorliegenden Fall würde das bedeuten, dass bei Betätigung des Betriebsbremsbetätigungselementes und bei ausgefallener Spannungsversorgung zwar in dem Fall, dass die Entlüftungsleitung mit der Steuerleitung verbunden ist, diese auch bis auf Atmosphärendruck entlüftet wird, dass aber trotzdem auf dem Steueranschluss des Relaisventils der darüber eingesteuerte Luftdruck aus der Betriebsbremsversorgungsleitung anliegt, und der Federspeicherbremszylinder somit vorerst nicht entlüftet wird. Erst bei Beendigung der Betätigung des Betriebsbremsbetätigungselementes fällt der Luftdruck in der Betriebsbremsversorgungsleitung ebenfalls ab und der Federspeicherbremszylinder wird entlüftet und somit die Feststellbremse angezogen.

Bevorzugterweise ist dabei das Select-High-Ventil als Doppelrückschlagventil ausgebildet. Diese Ausführungsform ist technisch besonders leicht umsetzbar.

Ebenfalls bevorzugt wird sowohl das pneumatisch betätigbare als auch das elektrisch betätigbare Steuerventil als jeweils federbelastetes 2/2-Wegeventil ausgebildet. Auch hier besteht der Vorteil in einer technisch einfachen Umsetzung. Dabei ist das elektrisch betätigbare Steuerventil normal offen und das pneumatisch betätigbare Steuerventil normal geschlossen.

Bei einer bevorzugten Ausführungsform der Erfindung mündet eine Anhängerbetriebsbremssteuerleitung zur Ansteuerung eines, durch die Druckluftbereitstellungseinheit mit Druckluft versorgten, Anhängerbetriebsbremssystems aus der Parkbremsventilanordnung.

Eine besonders bevorzugte Ausführungsform der Erfindung sieht vor, dass der Strömungswiderstand der Entlüftungsleitung oder der Luftauslassöffnung größer ist als der Strömungswiderstand der Steuerleitung, um eine Entlüftung der Steuerleitung nur bei abgeschalteter Druckluftversorgung zu ermöglichen.

Besonders einfach ist eine Beeinflussung bzw. Festlegung des Strömungswiderstandes durch eine Wahl der sich dazu invers verhaltenden Querschnittsfläche von der Entlüftungsleitung oder der Luftauslassöffnung möglich.

Der Vorteil hierbei ist darin zu sehen, dass, wenn die Entlüftungsleitung mit der Steuerleitung verbunden ist, diese dann nicht entlüftet werden kann, wenn die Parkbremsventilanordnung weiter mit Druckluft versorgt wird. Dies ist beispielsweise der Fall bei einem laufenden Motor, da üblicherweise der Druckluftkompressor eines Fahrzeuges an diesen Motor gekoppelt ist. Dann ist beispielsweise nicht möglich, dass der Fahrer versehentlich während der Fahrt, auch bei einem elektrischen Defekt wie dem Verlust der Spannungsversorgung, die Feststellbremsen anlegt.

Weitere die Erfindung verbessernde Maßnahmen werden nachstehend gemeinsam mit der Beschreibung von drei bevorzugten Ausführungsbeispielen der Erfindung anhand der drei Figuren näher dargestellt. Es zeigen:
- Figur 1: ein erfindungsgemäßes Bremssteuersystem mit Entlüftung der Steuerleitung,
- Figur 2: ein erfindungsgemäßes Bremssteuersystem mit Entlüftung der Druckluftversorgungsleitung,
- Figur 3: ein erfindungsgemäßes Bremssteuersystem ohne elektrisch betätigbares Steuerventil.

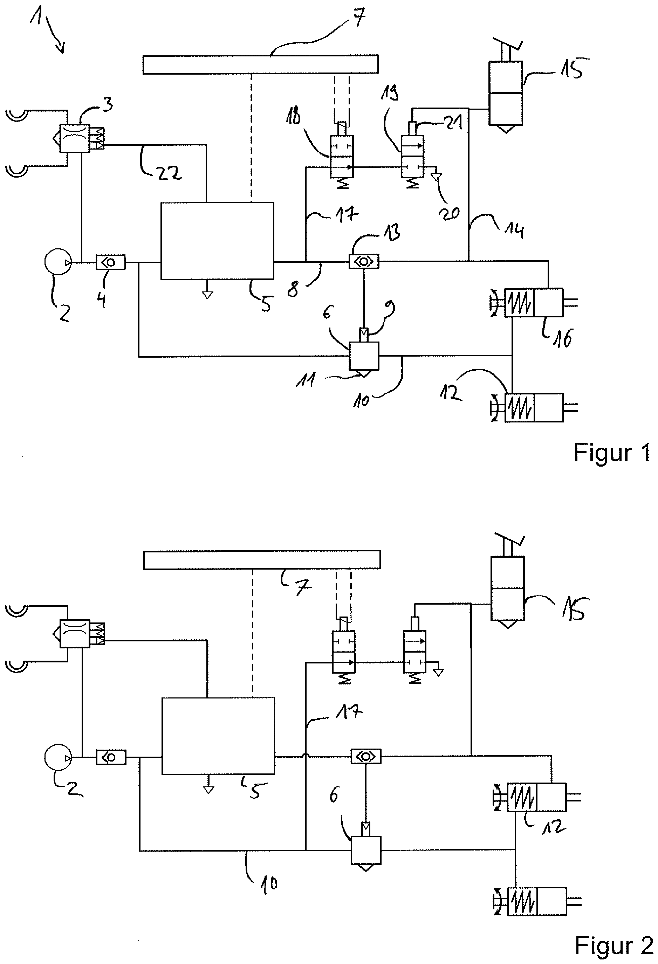

Gemäß Figur 1 umfasst das elektropneumatische Bremssteuersystem 1 eine Druckluftbereitstellungseinheit 2, über die neben einem Anhängerbetriebsbremssystem 3 auch, durch ein Rückschlagventil 4 abgesichert, eine Parkbremsventilanordnung 5 und ein Relaisventil 6 mit Druckluft versorgt werden.

Die Parkbremsventilanordnung 5 wird dabei elektronisch durch eine elektronische Steuereinheit 7 angesteuert. Solange diese Steuereinheit 7 ordnungsgemäß funktioniert, ist es möglich, darüber den Luftdruck in einer Steuerleitung 8 zu heben oder auf Atmosphärendruck zu senken, wobei dieser Luftdruck dann den Steueranschluss 9 des Relaisventils 6 beaufschlagt, wodurch dann die Versorgungsleitung 10 ausgangsseitig des Relaisventils 6 mit dem gleichen Luftdruck versehen wird, entweder durch Drucklufteinspeisung aus der Druckluftbereitstellungseinheit 2 oder durch Entlüftung durch den Entlüftungsanschluss 11 des Relaisventils 6. Die Versorgungsleitung 10 mündet ausgangsseitig des Relaisventils 6 in einem Federspeicherbremszylinder 12, so dass die entsprechenden Feststellbremsen bei Drucklufteinspeisung gelöst werden, und bei Entlüftung angezogen werden.

Das Select-High-Ventil 13 dient dazu, dass die Versorgungsleitung 10 auch bei entlüfteter Steuerleitung 8 nicht entlüftet werden kann, wenn gleichzeitig ein hoher beziehungsweise ein höherer Luftdruck in der Betriebsbremsversorgungsleitung 14 anliegt. Dabei wird durch einen nicht näher dargestellten Mechanismus bei Betätigung eines Betriebsbremsbetätigungselementes 15 die Betriebsbremsversorgungsleitung 14 und der Betriebsbremszylinder 16 mit Druckluft befüllt und bei gelösten Betriebsbremsbetätigungselement 15 wieder entlüftet. Das Select-High-Ventil 13 bewirkt also eine sogenannte Anti-Compound-Funktion, wobei vermieden wird, dass die Druckluft im Betriebsbremszylinder und die Feder im Federspeicherbremszylinder gleichzeitig eine Kraft auf Bremsbelag oder Bremsscheibe ausüben.

Erfindungsgemäß ist eine Entlüftungsleitung 17 mit der Steuerleitung 8 verbunden, welche über ein elektrisch betätigbares, monostabiles Steuerventil 18 und ein pneumatisch betätigbares, monostabiles Steuerventil 19 mit einer Luftauslassöffnung 20 verbunden werden kann. Das normal geschlossene pneumatisch betätigbare Steuerventil 19 kann dabei durch Druckluftbeaufschlagung aus der Betriebsbremsversorgungsleitung 14, also insbesondere bei Betätigung des Betriebsbremsbetätigungselementes 15, in seinen instabilen Schaltzustand befördert werden, bei dem die Entlüftungsleitung 17 mit der Luftauslassöffnung 20 verbunden wird. Das dazu in Reihe geschaltete elektrisch betätigbare Steuerventil ist hingegen normal offen und wird, sofern die elektronische Steuereinheit 7 funktionstüchtig ist, durch diese permanent in dem instabilen Schaltzustand gehalten, in dem die Entlüftungsleitung unterbrochen und somit der Weg von der Steuerleitung 8 zur Luftauslassöffnung 20 blockiert ist.

Solange also die Steuereinheit 7 ordnungsgemäß funktioniert, hat das aus Entlüftungsleitung 17, elektrisch betätigbarem Steuerventil 18, pneumatisch betätigbarem Steuerventil 19 und Luftauslassöffnung 20 bestehende, erfindungsgemäße System keinen Einfluss auf die Funktionsweise des Bremssteuersystems 1.

Beispielsweise bei einem Verlust der Spannungsversorgung schnappt das elektrisch betätigbare Steuerventil 18 zurück in die offene Stellung. Dann kann die Steuerleitung 8 durch Betätigung des Betriebsbremsbetätigungselementes 15 entleert werden. Sobald auch die Betriebsbremsversorgungsleitung 14 entleert ist, wird über das Select-High-Ventil 13 auf den Steueranschluss 9 des Relaisventils 6 der Atmosphärendruck vorgegeben, der dann über die Versorgungsleitung 10 in den Federspeicherbremszylinder 12 eingesteuert wird, indem dieser über die Versorgungsleitung 10 entleert wird, um die Feststellbremsen anzulegen.

Dabei ist die Querschnittsfläche der Luftauslassöffnung 20 so gering gewählt, dass die Steuerleitung 8 nicht entleert werden kann, während diese mit Druckluft aus der Druckluftbereitstellungseinheit 2 versorgt wird. Das Anlegen der Feststellbremsen ist also nur möglich, wenn die Druckluftbereitstellungseinheit 2 beziehungsweise der diese antreibende, hier nicht dargestellte, Motor abgestellt ist.

Gemäße Figur 2 ist die Entlüftungsleitung 17 mit der Versorgungsleitung 10 eingangsseitig des Relaisventils 6 verbunden. Alternativ kann auch, hier nicht explizit dargestellt, die Entlüftungsleitung 17 mit der Versorgungsleitung 10 ausgangsseitig des Relaisventils 6 verbunden sein. In beiden Fällen ist es möglich, die der Erfindung zugrundeliegende Aufgabe zu erfüllen, durch Betätigung des Betriebsbremsbetätigungselementes 15, wie zuvor dargelegt, die Federspeicherbremszylinder 12 zu entlüften.

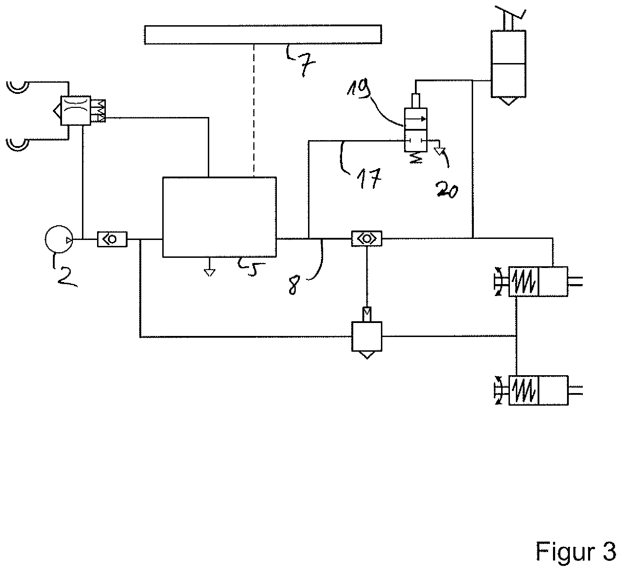

Gemäß Figur 3 ist lediglich ein pneumatisch betätigbares Steuerventil 19 in der Entlüftungsleitung 17 angeordnet. Dadurch kann die Steuerleitung 8 unabhängig von dem Betriebszustand der Steuereinheit 7 entlüftet werden.

Die Erfindung ist nicht beschränkt auf die vorstehend beschriebenen Ausführungsbeispiele. Es sind vielmehr auch Abwandlungen hiervor denkbar, welche von den nachfolgenden Ansprüchen mit umfasst sind. So ist es beispielsweise denkbar, dass auf das Select-High-Ventil und die Anti-Compound-Funktion verzichtet wird.

### Bezugszeichenliste

- 1: Bremssteuersystem
- 2: Druckluftbereitstellungseinheit
- 3: Anhängerbetriebsbremssystem
- 4: Rückschlagventil
- 5: Parkbremsventilanordnung
- 6: Relaisventil
- 7: Steuereinheit
- 8: Steuerleitung
- 9: Steueranschluss
- 10: Versorgungsleitung
- 11: Entlüftungsanschluss
- 12: Federspeicherbremszylinder
- 13: Select-High-Ventil
- 14: Betriebsbremsversorgungsleitung
- 15: Betriebsbremsbetätigungselement
- 16: Betriebsbremszylinder
- 17: Entlüftungsleitung
- 18: elektrisch betätigbares Steuerventil
- 19: pneumatisch betätigbares Steuerventil
- 20: Luftauslassöffnung
- 21: Steueranschluss
- 22: Anhängerbetriebsbremssteuerleitung

## Patentansprüche

1. Elektropneumatisches Bremssteuersystem (1) eines Fahrzeugs, umfassend eine elektronische Steuereinheit (7) zur Ansteuerung einer, durch eine Druckluftbereitstellungseinheit (2) mit Druckluft versorgten, elektropneumatischen Parkbremsventilanordnung (5), eine daraus mündende Steuerleitung (8) zur Steuerung der Drucklufteinspeisung und Entlüftung eines Federspeicherbremszylinders (12), ein über eine Versorgungsleitung (10) eingangsseitig mit der Druckluftbereitstellungseinheit (2) und ausgangsseitig mit dem Federspeicherbremszylinder (12) verbundenes, durch die Steuerleitung (8) angesteuertes Relaisventil (6), zur Ausgabe des in der Steuerleitung (8) anliegenden Luftdrucks, ein manuell betätigbares, mechanisches Betriebsbremsbetätigungselement (15) zur Steuerung der Drucklufteinspeisung und Entlüftung eines Betriebsbremszylinders (16) über eine Betriebsbremsversorgungsleitung (14),
**dadurch gekennzeichnet, dass** ein monostabiles, pneumatisch betätigbares Steuerventil (19), umfassend einen durch die Betriebsbremsversorgungsleitung (14) angesteuerten Steueranschluss (21), im stabilen Schaltzustand eine ausgangsseitige, in die Atmosphäre mündende, Luftauslassöffnung (20) und eine eingangsseitige Entlüftungsleitung (17) voneinander trennt und in einem instabilen Schaltzustand miteinander verbindet, wobei die Entlüftungsleitung (17) dazu geeignet ist, den Federspeicherbremszylinder (12) durch Betätigung des Betriebsbremsbetätigungselements (15) zu entlüften.

2. Elektropneumatisches Bremssteuersystem (1) nach Anspruch 1,
**dadurch gekennzeichnet, dass** die Entlüftungsleitung (17) mit der Druckluftversorgungsleitung (10) ausgangsseitig oder eingangsseitig des Relaisventils (6) verbunden ist, um den Federspeicherbremszylinder (12) durch Betätigung des Betriebsbremsbetätigungselements (15) zu entlüften.

3. Elektropneumatisches Bremssteuersystem (1) nach einem der vorherigen Ansprüche,
**dadurch gekennzeichnet, dass** die Entlüftungsleitung (17) mit der Steuerleitung (8) verbunden ist, um den Federspeicherbremszylinder (12) durch Betätigung des Betriebsbremsbetätigungselements (15) zu entlüften.

4. Elektropneumatisches Bremssteuersystem (1) nach einem der vorherigen Ansprüche,
**dadurch gekennzeichnet, dass** ein, durch die elektronische Steuereinheit (7) angesteuertes, monostabiles, elektrisch betätigbares Steuerventil (18) in Reihe mit dem pneumatisch betätigbaren Steuerventil (19) geschaltet ist, welches in der stabilen Schaltstellung offen und in einer instabilen Schaltstellung geschlossen ist, zur Verhinderung der Entlüftung des Federspeicherbremszylinders (12) durch das pneumatisch betätigbare Steuerventil (19).

5. Elektropneumatisches Bremssteuersystem (1) nach einem der vorherigen Ansprüche,
**dadurch gekennzeichnet, dass** die Steuerleitung (8) das Relaisventil (6) über ein Select-High-Ventil (13) ansteuert, welches eingangsseitig zusätzlich zur Steuerleitung (8) auch mit der Betriebsbremsversorgungsleitung (14) verbunden ist, zur Erwirkung einer Anti-Compound-Funktion.

6. Elektropneumatisches Bremssteuersystem (1) nach Anspruch 5,
**dadurch gekennzeichnet, dass** das Select-High-Ventil (13) als Doppelrückschlagventil ausgebildet ist.

7. Elektropneumatisches Bremssteuersystem (1) nach einem der vorherigen Ansprüche,
**dadurch gekennzeichnet, dass** das pneumatisch betätigbare Steuerventil (19) als federbelastetes 2/2-Wegeventil ausgebildet ist.

8. Elektropneumatisches Bremssteuersystem (1) nach einem der vorherigen Ansprüche,
**dadurch gekennzeichnet, dass** das elektrisch betätigbare Steuerventil (18) als federbelastetes 2/2-Wegeventil ausgebildet ist.

9. Elektropneumatisches Bremssteuersystem (1) nach einem der vorherigen Ansprüche,
**dadurch gekennzeichnet, dass** eine Anhängerbetriebsbremssteuerleitung (22) zur Ansteuerung eines, durch die Druckluftbereitstellungseinheit (2) mit Druckluft versorgten, Anhängerbetriebsbremssystems (3) aus der Parkbremsventilanordnung (5) mündet.

10. Elektropneumatisches Bremssteuersystem (1) nach einem der vorherigen Ansprüche,
**dadurch gekennzeichnet, dass** der Strömungswiderstand der Entlüftungsleitung (17) oder der Luftauslassöffnung (20) größer ist als der Strömungswiderstand der Steuerleitung (8), um eine Entlüftung der Steuerleitung (8) während Druckluftbereitstellung durch die Druckluftbereitstellungseinheit (2) zu verhindern.

## Claims

1. An electro-pneumatic brake control system (1) of a vehicle, comprising an electronic control unit (7) for actuating an electro-pneumatic parking brake valve arrangement (5) which is supplied with compressed air by a compressed air supply unit (2), a control line (8), which leads from said parking brake valve arrangement (5) and has the purpose of controlling the compressed air input and venting a spring-loaded brake cylinder (12), a relay valve (6), which is connected on the input side to the compressed air supply unit (2) via a supply line (10) and on the output side to the spring-loaded brake cylinder (12) and is actuated by the control line (8), for outputting the air pressure which is present in the control line (8), and a mechanical service brake activation element (15) which can be activated manually and has the purpose of controlling the compressed air input and venting a service brake cylinder (16) via a service brake supply line (14),
**characterized in that** a monostable control valve (19) which can activated pneumatically, comprising a control port (21) which is actuated by the service brake supply line (14), in the stable switched state disconnects an output-side air outlet opening (20), leading into the atmosphere, and an input-side venting line (17) from one another, and in an unstable switched state connects them to one another, wherein the venting line (17) is suitable for venting the spring-loaded brake cylinder (12) by activating the service brake activation element (15).

2. The electro-pneumatic brake control system (1) as claimed in claim 1,
**characterized in that** the venting line (17) is connected to the compressed air supply line (10) on the output side or input side of the relay valve (6), in order to vent the spring-loaded brake cylinder (12) by activating the service brake activation element (15).

3. The electro-pneumatic brake control system (1) as claimed in one of the preceding claims,
**characterized in that** the venting line (17) is connected to the control line (8) in order to vent the spring-loaded brake cylinder (12) by activating the service brake activation element (15).

4. The electro-pneumatic brake control system (1) as claimed in one of the preceding claims,
**characterized in that** a monostable control valve (18), which can be activated electrically and is actuated by the electronic control unit (7), is connected in series with the control valve (19) which can be activated pneumatically and is open in the stable switched position and closed in an unstable switched position, for preventing the venting of the spring-loaded brake cylinder (12) by the control valve (19) which can be activated pneumatically.

5. The electro-pneumatic brake control system (1) as claimed in one of the preceding claims,
**characterized in that** the control line (8) actuates the relay valve (6) via a select-high valve (13) which, in addition to being connected to the control line (8), is also connected to the service brake supply line (14) on the input side in order to bring about an anti-compound function.

6. The electro-pneumatic brake control system (1) as claimed in claim 5,
**characterized in that** the select-high valve (13) is embodied as a double non-return valve.

7. The electro-pneumatic brake control system (1) as claimed in one of the preceding claims,
**characterized in that** the control valve (19) which can be activated pneumatically is embodied as a spring-loaded 2/2-way valve.

8. The electro-pneumatic brake control system (1) as claimed in one of the preceding claims,
**characterized in that** the control valve (18) which can be activated electrically is embodied as a spring-loaded 2/2-way valve.

9. The electro-pneumatic brake control system (1) as claimed in one of the preceding claims,
**characterized in that** a trailer service brake control line (22) for actuating a trailer service brake system (3), which is supplied with compressed air by the compressed air supply unit (2), leads out of the parking brake valve arrangement (5).

10. The electro-pneumatic brake control system (1) as claimed in one of the preceding claims,
**characterized in that** the flow resistance of the venting line (17) or of the air outlet opening (20) is greater than the flow resistance of the control line (8), in order to prevent venting of the control line (8) while compressed air is being supplied by the compressed air supply unit (2).

## Revendications

1. Système (1) de commande de frein électropneumatique d'un véhicule, comprenant une unité (7) électronique de commande, pour commander un système (5) de soupape de frein de stationnement électropneumatique, alimenté en air comprimé par une unité (2) de préparation d'air comprimé, un conduit (8) de commande en débouchant, pour commander l'injection d'air comprimé et la purge d'un cylindre (12) de frein à ressort accumulateur, une soupape (6) relais reliée par un conduit (10) d'alimentation du côté de l'entrée à l'unité (2) de préparation d'air comprimé et du côté de la sortie au cylindre (12) de frein à ressort accumulateur et commandé par le conduit (8) de commande pour la sortie de l'air comprimé s'appliquant dans le conduit (8) de commande, un élément (15) mécanique à actionnement manuel d'actionnement de frein de service, pour commander l'injection d'air comprimé et la purge d'un cylindre (16) de frein de service, par un conduit (14) d'alimentation de frein de service,
**caractérisé en ce qu'**une soupape (19) de commande, monostable et à actionnement pneumatique, comprenant un raccord (21) de commande, commandé par le conduit (14) d'alimentation de frein de service, sépare l'une de l'autre, dans l'état de commutation stable, une ouverture (20) de sortie d'air du côté de la sortie et débouchant dans l'atmosphère et un conduit (17) de purge du côté de l'entrée et les met en communication entre elles dans un état de commutation instable, le conduit (17) de purge étant propre à purger le cylindre (12) de frein à ressort accumulateur par actionnement de l'élément (15) d'actionnement de frein de service.

2. Système (1) de commande de frein électropneumatique suivant la revendication 1,
**caractérisé en ce que** le conduit (17) de purge communique avec le conduit (10) d'alimentation en air comprimé du côté de la sortie ou du côté de l'entrée de la soupape (6) relais, afin de purger le cylindre (12) de frein à ressort accumulateur par actionnement de l'élément (15) d'actionnement du frein de service.

3. Système (1) de commande de frein électropneumatique suivant l'une des revendications précédentes,
**caractérisé en ce que** le conduit (17) de purge communique avec le conduit (8) de commande, afin de purger le cylindre (12) de frein à ressort accumulateur par actionnement de l'élément (15) d'actionnement de frein de service.

4. Système (1) de commande de frein électropneumatique suivant l'une des revendications précédentes,
**caractérisé en ce qu'**une soupape (18) de commande à actionnement électrique, monostable et commandée par l'unité (7) électronique de commande, est montée en série avec la soupape (19) de commande à actionnement pneumatique, et, dans l'état de commutation stable est ouverte et dans un état de commutation instable est fermée, pour empêcher la purge du cylindre (12) de frein à ressort accumulateur par la soupape (19) de commande à actionnement pneumatique.

5. Système (1) de commande de frein électropneumatique suivant l'une des revendications précédentes,
**caractérisé en ce que** le conduit (8) de commande commande la soupape (6) relais par une soupape (13) select-high, qui, du côté de l'entrée, communique supplémentairement au conduit (8) de commande également avec le conduit (14) d'alimentation de frein de service, pour donner une fonction anti-compound.

6. Système (1) de commande de frein électropneumatique suivant la revendication 5,
**caractérisé en ce que** la soupape (13) select-high est constituée sous la forme d'un double clapet antiretour.

7. Système (1) de commande de frein électropneumatique suivant l'une des revendications précédentes,
**caractérisé en ce que** la soupape (19) de commande à actionnement pneumatique est constituée sous la forme d'une soupape à 2/2 voies soumise à l'action d'un ressort.

8. Système (1) de commande de frein électropneumatique suivant l'une des revendications précédentes,
**caractérisé en ce que** la soupape (18) à actionnement électrique est constituée sous la forme d'une soupape à 2/2 voies soumise à l'action d'un ressort.

9. Système (1) de commande de frein électropneumatique suivant l'une des revendications précédentes,
**caractérisé en ce qu'**un conduit (22) de commande de frein de service de remorque, pour commander un système (3) de frein de service de remorque alimenté en air comprimé par l'unité (2) de préparation d'air comprimé, débouche du système (5) de soupape de frein de stationnement.

10. Système (1) de commande de frein électropneumatique suivant l'une des revendications précédentes,
**caractérisé en ce que** la résistance à l'écoulement du conduit (17) de purge ou de l'ouverture (20) de sortie d'air est plus grande que la résistance à l'écoulement du conduit (8) de commande, afin d'empêcher une purge du conduit (8) de commande pendant la préparation d'air comprimé par l'unité (2) de préparation d'air comprimé.
